# EUROPÄISCHE PATENTSCHRIFT

(11) **EP 0 521 387 B1**
(45) Veröffentlichungstag und Bekanntmachung des Hinweises auf die Patenterteilung: **15.02.1995**
(21) Anmeldenummer: 92110671.2
(22) Anmeldetag: 25.06.1992
(51) Int. Cl.: A47B 57/18, F16B 12/30

(54) **Regal**
Shelf
Etagère

(30) Priorität: 02.07.1991 DE 9108100 U
(43) Veröffentlichungstag der Anmeldung: 07.01.1993
(73) Patentinhaber: Viessmann, Hans, Dr., 95030 Hof/Saale (DE)
(72) Erfinder: Viessmann, Hans, Dr., 95030 Hof/Saale (DE)
(74) Vertreter: Wolf, Günter, Dipl.-Ing.

(56) Entgegenhaltungen:
- EP-A- 0 104 678
- DE-U- 8 222 813
- FR-A- 2 543 231
- GB-A- 664 642
- GB-A- 1 549 138
- LU-A- 34 806

## Beschreibung

Die Erfindung betrifft ein Regal, insbesondere zur Aufstellung in Kühl- und Frischhaltezellen für die Lagerung von Lebensmitteln, Getränken od. dgl.gemäß Oberbegriff des Patentanspruches 1.

Derartige Regale sind hinlänglich bekannt und in Benutzung. Die Regalböden sind dabei in der Regel aus Blech (Edelstahl oder Blech mit lebensmittelverträglicher Beschichtung) mit abgekröpften Rändern gebildet, und zwar aus Gründen der Bodensteifigkeit und der Anschließbarkeit an die Vertikalholme bzw. Stützen (siehe bspw. DE-A-14 29 561).

Für die Anbindung der Regalböden an die in der Regel vier Vertikalholme gibt es im Prinzip drei Möglichkeiten:
a) Verwendung von Stützen aus Vollmaterial mit entsprechenden Innengewinde-Sacklochbohrungen, so daß die Regalböden mit Kopfschrauben von der Unterseite und den abgekröpften Bodenrändern aus direkt mit den Stützen verschraubt werden können. Siehe hierzu auch DE-U-81 25 880 mit einem entsprechend dickwandigen Sonderprofil für die Stützen.
b) Verwendung von Stützen aus Hohlprofilen und geeigneten Verbindungsbeschlagteilen, wobei in Rücksicht auf gewünschte Anordnungshöhen der Regalböden an den Stützen die Hohlprofile Längsschlitze aufweisen, in denen die Verbindungsbeschlagteile verankert werden können (US-A-3 082 711).
c) Schließlich ist es bspw. nach der DE-A-23 62 529 bekannt, die Böden selbst mit Eckbeschlägen auszustatten, mit denen die Böden auf im Querschnitt kreisförmige Rohre in beliebiger Höhe aufgesteckt und mit Verkeilungshülsen fixiert werden können.

Die Einbindung der Stützen in mehr oder weniger entsprechende Eckausnehmungen der Regalböden ist dabei üblich, wodurch derartige Regale eine bessere Stabilität erhalten und in der Regel auf rückseitige oder seitlihe Verstrebungen (siehe DE-GM 82 22 813) verzichtet werden kann.

An die Sauberkeit bzw. die Sauberhaltung derartiger Regale müssen im Lebensmittelbereich besonders hohe Anforderungen gestellt werden. Am besten sind dafür Regale einerseits nach Prinzip a) geeignet, da sich hierbei ein Minimum von Spalten an den Anschlußstellen zwischen den Böden und den Stützen ergeben, andererseits verlangt dies die Verwendung von Stützen aus Vollmaterial, was insbesondere bei Verwendung von Edelstahl wegen der Kosten nicht vertretbar ist.

Es bietet sich also an sich an, Hohlprofile im Sinne der US-A-3 082 711 aus möglichst dünnem Edelstahlblech zu verwenden, die jedoch Längsschlitzen verlangen und relativ aufwendige Verbindungsbeschläge, was beides wiederum der Sauberhaltung entgegensteht und Keimbildungsnestern Tür und Tor öffnet. Abgesehen davon erschweren derartig geschlitzte Profile mit entsprechenden Verbindungsbeschlägen für die Böden die Montage solcher Regale, da dies immer mit einer beträchtlichen "Fummelei" und zeitaufwendiger genaueren Höheneinstellung verbunden ist. Diese Gesichtspunkten ist zwar mit einem Regal nach dem vorerwähnten DE-U-81 25 880 Rechnung getragen, dieses Regal verlangt aber ein Spezialprofil und zusätzliche Spannbügel, um die Böden an vorgegebenen Stellen der Stützen festlegen zu können.

Der Erfindung liegt demgemäß, ausgehend von Regalen der eingangs genannten Art, die Aufgabe zugrunde, diese dahingehend zu verbessern, daß unter Beibehaltung geometrisch einfacher und damit einfach abzudichtender bzw. zu versiegelnder Anschlußverhältnisse dünnwandige und schlitzfreie Hohlprofile mit ebenfalls geometrisch einfachem Querschnitt verwendet werden können, wobei mit ebenso einfachen Mitteln dafür gesorgt sein soll, daß die zu verwendenden Kopfschrauben einen ausreichenden und dauerhaften Halt an den Stützen trotz der Verwendung von dünnwandigem Hohlprofilmaterial finden.

Diese Aufgabe ist mit einem Regal der eingangs genannten Art nach der Erfindung durch die im Kennzeichen des Patentanspruches 1 angeführten Merkmale gelöst. Vorteilhafte Weiterbildungen ergeben sich nach den Unteransprüchen.

Bei diesem erfindungsgemäßen Regal ist zwar auf eine stufenlose Einstellbarkeit der Böden zu den Stützen verzichtet, da die Stützen keine Längsschlitze aufweisen, wodurch sich aber andererseits keine Schmutzansammlungen in den geschlossenen Profilen bilden können, für die bevorzugt im Querschnitt einfach Dreiecksprofile benutzt werden. Durch die neuartige Ausbildung ergeben sich geometrisch einfache Anschlußverhältnisse der Böden an die Stützen im Sinne des vorerwähnten Prinzips a), dies aber mit der Maßgabe der Verwendung von im Vergleich zu längsgeschlitzten Hohlprofilen stabileren geschlossenen Hohlprofilen, wodurch die grundsätzlich unvermeidbaren Anschlußspalten zwischen Böden und Stützen sehr einfach abzudichten bzw. zu versiegeln sind, was noch näher erläutert wird. Der durch die Maßgabe der Verwendung von dünnwandigen Hohlprofilen an sich gegebene Schwierigkeit einer einfachen aber gleichermaßen dauerhaften und stabilen Anbindung der Böden an die Stützen ist durch die besondere Ausbildung der mit Innengwinde versehenen Öffnungen Rechnung getragen, durch welche Ausbildung trotz der Verwendung von dünnwandigem Profilmaterial ausreichend lange und damit stabile Gewindelängen an den Profilen erzielt werden können, die sich sonst nicht ergäben, wenn man lediglich in die Lochränder von dünnem Blech Gewinde einschneiden würde.

Das erfindungsgemäße Regal wird nachfolgend anhand der zeichnerischen Darstellung von Ausführungsbeispielen näher erläutert.

Es zeigt schematisch
- Fig. 1: perspektivisch das Bauprinzip derartiger Regale;
- Fig. 2, 3: Schnitte durch die hier interessierenden Eck- bzw. Verbindungsbereiche des Regals;
- Fig. 4: perspektivisch den Anschlußbereich der an die Stützen gemäß Fig. 2, 3 anzuschließenden Böden;
- Fig. 5: in Seitenansicht einen Anschlußbereich mit besonderer Spaltabdichtung;
- Fig. 6: einen Längsschnitt durch einen Vertikalholm und
- Fig. 7: eine besondere Ausführungsform.

Das Regal besteht aus mindestens zwei Regalböden mit Eckausnehmungen und aus vier hohlen Vertikalholmen, deren Querschnitt dem Querschnitt der Eckausnehmungen entspricht, wobei die Regalböden im Bereich ihrer Eckausnehmungen und die Vertikalholme mit zwischen den abgekröpften, mit Durchgriffsöffnungen versehenen Eckausnehmungsflanken der Regalböden anliegenden Holmflanken durch Kopfschrauben miteinander verbunden sind.

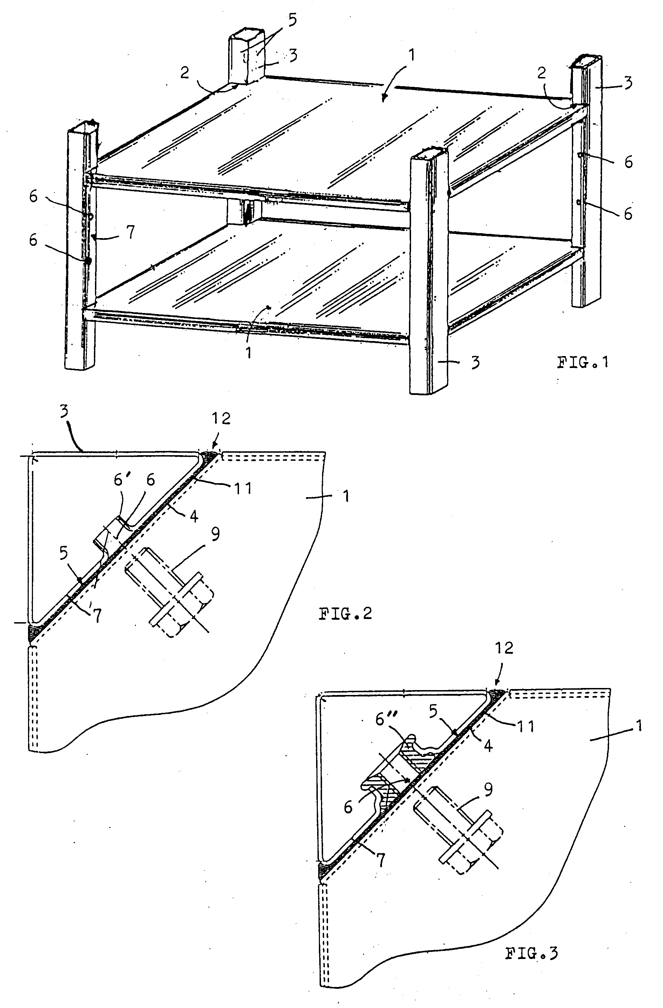

Für dieses Regal ist nun und wie insbesondere aus Fig. 2, 3 ersichtlich, wesentlich, daß die an den Eckausnehmungsflanken 4 der Böden 1 anliegenden Holmflanken 5 der hohlen Vertikalholme 3 als bis auf mit Innengewinde versehene Öffnungen 6 geschlossene Holmwände 7 ausgebildet und die mit Innengewinde versehenen Öffnungen 6 aus in das Innere der Vertikalholme 3 gerichtete Einhalsungen 6' gebildet oder diese in Form von in die Holmflanken 5 eingepreßte Muttern 6'' ausgebildet sind und daß zumindest die Spaltöffnungen der Spalte 12 zwischen den Holmflanken 5 und den angeschlossenen Regalböden 1 abgedichtet sind.

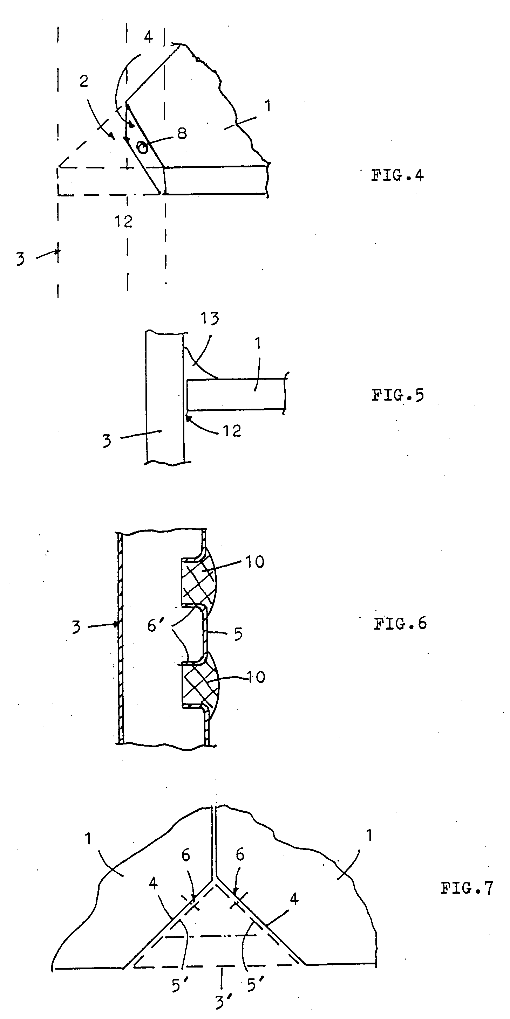

Für die Vertikalholme 3 werden bevorzugt Hohlprofile aus dünnwandigem, d.h., 1,5 bis 2 mm starkem Edelstahlblech mit gleichschenklig-rechtwinkligem Querschnitt, wie dargestellt, benutzt, wobei die die Holmflanke 5 bildende Hypothenuse die Anlageflanke für die jeweilige Eckausnehmungsflanke 4 (siehe Fig. 4) der Böden 1 bildet, da diese Zuordnung und Ausbildung die größere Stabilität für das ganze Regal gewährleistet und am einfachsten sowohl bezüglich der Stützen und der Böden herstellbar ist. Bei den mit Innengewinde versehenen Öffnungen 6 handelt es sich nun nicht einfach um in der Holmwand 7 eingeschnittene oder eingestanzte Löcher, sondern im Falle der Fig. 2 sind in der Holmwand 7 in Reihe übereinander (siehe Fig. 6) mehrere Einhalsungen 6' vorgesehen, in die Innengewinde eingeschnitten ist. Im Falle der Fig. 3 werden die Öffnungen 6 von, wie bspw. dargestellt, in die Hohlmwand 7 eingepreßten Muttern 6'' repräsentiert. Nach Einbau der Böden 1 freibleibende Öffnungen 6 sind mit Pfropfen 10 (siehe ebenfalls Fig. 6) verschlossen. Außer den Kopfschrauben 9 sind also in beiden Fällen keinerlei zusätzliche Beschlagteile oder sonstige Halte- bzw. Spannglieder od. dgl. erforderlich.

Der an jeder Verbindungsstelle unvermeidbare Anschlußspalt 12 entspricht praktisch nur einer ebenen Fläche, so daß wie aus den Fig. 2, 3 ersichtlich, ein ebenflächiges dünnes Dichtungsblatt aus geeignetem Material als Spaltabdichtung 11 eingefügt werden kann, das entweder bezüglich seiner Ränder, wie dargestellt, von vornherein ausgeformt sein kann oder das sich aufgrund der Verbindungspressung beim Anziehen der Kopfschrauben 9 etwa in dieser Weise verformt. Damit ist ein Eindringen von Feuchtigkeit in den Spalt bzw. zwischen Ausnehmungsflanke 4 des Bodens 1 und Holmflanke 7 mit Sicherheit unterbunden. Da im Anschlußbereich einfache geometrische Verhältnisse vorliegen und insbesondere die Holmflanke 7 keinen Längsschlitz aufweist, kann sogar vorgesehen werden, für die Spaltabdichtung ein spritzbares Dichtungsmittel 13, wie in Fig. 5 dargestellt, für den Spalt- bzw. Zwickelverschluß aufzutragen. Solche dafür geeignete Dichtungsmittel aus transparentem Kunststoff sind bspw. zum Abdichten von Fensterscheiben bekannt.

Das gleiche Anbindungs- bzw. Verbindungsprinzip kann auch zur Anwendung kommen bei bspw. extrem langen Regalbodenflächen, die einer Mittelabstützung bedürfen. Hierzu wird auf Fig. 7 verwiesen, gemäß der für eine solche lange Regalbodenfläche bspw. zwei Böden 1 auf gleicher Höhe angeordnet werden. Bei gleicher Größe der Eckausnehmungsausbildung, wie vorbeschrieben, können dafür die gleichen Vertikalholme 3 benutzt werden, wobei jedoch in beiden die Katheden bildenden Flankenwänden Öffnungen 6 mit entsprechendem Reihenraster angeordnet sein müssen.

Da unter den gegebenen Voraussetzungen der Ausnehmungszwickel zwischen den beiden Böden 1 doppelt so groß ist, wie eine Ausnehmung allein, setzt sich hierbei der entsprechende Vertikalholm 3 nur entsprechend tiefer (siehe strichpunktierte Linie in Fig. 7) in den Ausnehmungszwickel zwischen beiden Böden 1 ein. Abgesehen davon ist es aber auch möglich, entweder die Eckausnehmungen am Stoß beider Böden 1 entsprechend kleiner zu halten oder für diesen großen Zwickel entsprechend querschnittsgroße Vertikalholme 3' vorzusehen.

## Patentansprüche

1. Regal, insbesondere zur Aufstellung in Kühl- und Frischhaltezellen für die Lagerung von Lebensmitteln, Getränken od. dgl., bestehend aus mindestens zwei Regalböden (1) mit Eckausnehmungen (2) und aus vier hohlen Vertikalholmen (3), deren Querschnitt dem Querschnitt der Eckausnehmungen (2) entspricht, wobei die Regalböden (1) im Bereich ihrer Eckausnehmungen (2) und die Vertikalholme (3) mit zwischen den abgekröpften, mit Durchgriffsöffnungen (8) versehenen Eckausnehmungsflanken (4) der Regalböden (1) anliegenden Holmflanken (5) durch Kopfschrauben (9) miteinander verbunden sind,
**dadurch gekennzeichnet,**
daß die an den Eckausnehmungsflanken (4) der Regalböden (1) anliegenden Holmflanken (5) der hohlen Vertikalholme (3) als bis auf mit Innengewinde versehene Öffnungen (6) geschlossene Holmwände (7) ausgebildet und die mit Innengewinde versehenen Öffnungen (6) aus in das Innere der Vertikalholme (3) gerichtete Einhalsungen (6') gebildet oder diese in Form von in die Holmflanken (5) eingepreßte Muttern (6'') ausgebildet sind, und daß zumindest die Spaltöffnungen der Spalte (12) zwischen den Holmflanken (5) und den angeschlossenen Regalböden (1) abgedichtet sind.

2. Regal nach Anspruch 1,
**dadurch gekennzeichnet,**
daß in den Holmflanken (5) jeweils mehr Öffnungen (6) als der Anzahl der Regalböden (1) entsprechend angeordnet und die bodenfreien Öffnungen (6) mit Pfropfen (10) verschlossen sind.

3. Regal nach Anspruch 1 oder 2,
**dadurch gekennzeichnet,**
daß zwischen den Eckausnehmungsflanken (4) der Regalböden (1) und den Holmflanken (5) im wesentlichen ebenflächige, der Größe der Eckausnehmungsflanken (4) entsprechende Spaltabdichtungen (11) angeordnet sind.

4. Regal nach Anspruch 1 oder 2,
**dadurch gekennzeichnet,**
daß die Spalte (12) zwischen den Eckausnehmungen (2) und den daran anliegenden Holmflanken (5) mit einem über den Spalten (12) auftragbaren Dichtungsmittel (13) verschlossen sind.

5. Regal nach Anspruch 4,
**dadurch gekennzeichnet,**
daß das Dichtungsmittel (13) transparent ist.

6. Regal nach einem der Ansprüche 1 bis 5,
**dadurch gekennzeichnet,**
daß die Vertikalholme (3) einen gleichschenklig-rechtwinkligen Dreiecksquerschnitt haben und die mit Innengewinde versehenen Öffnungen (6) in der die Hypothenuse bildenden Holmflanke (5) angeordnet sind.

7. Regal nach einem der Ansprüche 1 bis 5,
**dadurch gekennzeichnet,**
daß die Vertikalholme (3) einen gleichschenklig-rechtwinkligen Dreiecksquerschnitt haben und die mit Innengewinde versehenen Öffnungen (6) in den die Katheden bildenden Holmflanken (5') angeordnet sind.

## Claims

1. A rack, in particular intended for being mounted in cooling or fresh-keeping cells for storing foodstuffs, beverages or the like, comprising at least two rack trays (1) having corner recesses (2) and four hollow vertical posts (3) the cross-sections of which correspond to the cross-sections of the corner recesses (2), with the rack trays (1) in the area of their corner recesses (2) and the vertical posts (3) with post flanks (5) in abutting relationship between the cranked corner recess flanks (4) of the rack trays (1) provided with passage openings (8) being interconnected by cap screws (9), characterized in that the post flanks (5) of the hollow vertical posts (3) in abutment with the corner recess flanks (4) of the rack bottoms (1) are formed as hollow walls (7) closed except for the apertures (6) provided with internal threads, and that the apertures (6) provided with internal threads are formed from neckings (6') directed toward the interior of the vertical posts (3) or that they are in the form of nuts (6'') pressed into the post flanks (5), and that at least the apertures of the gaps (12) are sealed between the post flanks (5) and the rack trays (1) connected.

2. A rack according to claim 1,
characterized in that respectively a number of apertures (6) greater than the number of rack trays (1) are provided in the post flanks (5) and that the trayless apertures (6) are closed by plugs (10).

3. A rack according to claims 1 or 2,
characterized in that provided between the corner recess flanks (4) of the rack trays (1) and the post flanks (5) are substantially planar gap sealants (11) corresponding to the size of the corner recess flanks (4).

4. A rack according to claims 1 or 2,
characterized in that the gaps (12) between the corner recesses (2) and the post flanks (5) in abutment therewith are closed by a sealing means (13) applicable to the gaps (12).

5. A rack according to claim 4,
characterized in that the sealing means (13) is transparent.

6. A rack according to any one of claims 1 to 5, characterized in that the vertical posts (3) are of an equal-leg rectangular triangle cross-section and that the apertures (6) provided with internal threads are arranged in the post flank (5) forming the hypotenuse.

7. A rack according to any one of claims 1 to 5, characterized in that the vertical posts (3) are of an equal-leg rectangular triangle cross-section, and that the apertures (6) provided with internal threads are arranged in the post flanks (5') forming the legs.

## Revendications

1. Etagère, destinée en particulier à être disposée dans une chambre froide ou de réfrigération pour le stockage de denrées alimentaires, de boissons et analogues, comportant au moins deux tablettes (1) d'étagère comportant des coins évidés (2) ainsi que quatre montants verticaux creux (3), dont les sections transversales correspondent aux sections transversales des coins évidés (2), de sorte que les tablettes (1) d'étagère sont reliées au niveau de leurs coins évidés (2) aux montants verticaux (3) par des boulons à tête (9), les côtés des montants étant agencés entre les côtés (4) des coins évidés repliés vers le bas comportant des ouvertures traversantes (8),
caractérisée en ce que,
les côtés (5) des montants verticaux creux (3) qui sont agencés au niveau des côtés (4) des coins évidés des tablettes (1) sont formés en tant que parois fermées (7) des montants sauf au niveau d'ouvertures (6) munies d'un filetage intérieur, les ouvertures (6) comportant un filetage intérieur pouvant être formées par des parties embouties (6') situées à l'intérieur des montants verticaux (3) ou celles-ci étant formées à partir d'écrous (6'') insérés avec compression à l'intérieur des côtés (5) des montants, au moins les ouvertures créees par les interstices (12) existant entre les côtés (5) des montants et les tablettes (1) d'étagère qui leurs sont reliées étant rendues étanches.

2. Etagère selon la revendication 1, caractérisée en ce que plusieurs ouvertures (6) sont formées dans les côtés (5) des montants, celles-ci étant en surnombre par rapport aux tablettes (1) de l'étagère, et en ce que les ouvertures (6) non occupées par les tablettes sont fermées à l'aide de bouchons (10).

3. Etagère selon la revendication 1 ou 2, caractérisée en ce que des joints d'étanchéité (11) sont agencés dans l'interstice existant entre les côtés (4) des coins évidés des tablettes (1) de l'étagère et les côtés (5) des montants, ceux-ci ayant une forme essentiellement plane et ayant des dimensions correspondant aux côtés (4) des coins évidés.

4. Etagère selon la revendication 1 ou 2, caractérisée en ce que les interstices (12) existant entre les coins évidés (2) et les côtés (5) des montants reliés à ceux-ci sont fermés par l'intermédiaire de moyens d'étanchéification (13) pouvant venir recouvrir l'interstice (12).

5. Etagère selon la revendication 4, caractérisée en ce que les moyens d'étanchéification (13) sont transparents.

6. Etagère selon l'une quelconque des revendications 1 à 5, caractérisée en ce que les montants verticaux (3) forment en coupe transversale un triangle rectangle isocèle et en ce que les ouvertures (6) filetées intérieurement sont agencées sur le côté (5) des montants formant hypoténuse.

7. Etagère selon l'une quelconque des revendications 1 à 5, caractérisée en ce que les montants verticaux (3) forment en coupe transversale un triangle rectangle isocèle et en ce que les ouvertures (6) filetées intérieurement sont agencée& sur les côtés (5') des montants formant les côtés adjacents à l'angle droit.
